# EUROPEAN PATENT SPECIFICATION

(11) **EP 0 651 302 B1**
(45) Date of publication and mention of the grant of the patent: **13.05.1998**
(21) Application number: 94116470.9
(22) Date of filing: 19.10.1994
(51) Int. Cl.: G05B 19/042

(54) **Interface for devices controlled by microcontrollers and/or microprocessors**
Schnittstelle für durch Mirkoprozessoren und/oder Mikrocontroller gesteuerte Geräte
Interface pour appareils commandés par micro-contrôleurs et/ou microprocesseurs

(30) Priority: 29.10.1993 IT TO930816
(43) Date of publication of application: 03.05.1995
(73) Proprietor: MAGNETI MARELLI S.p.A., 20145 Milano (IT)
(72) Inventor: Ferrari, Silvio, I-20082 Binasco (Milano) (IT)
(74) Representative: Quinterno, Giuseppe

(56) References cited:
- EP-A- 0 418 665
- WO-A-92/17829
- FR-A- 2 625 822
- GB-A- 2 159 987

## Description

The present invention relates in general to interfaces for devices controlled by microprocessors and/or microcontrollers and more specifically it relates to interfaces of this type which can actuate diagnosis functions of the devices controlled.

Recently, as is known, devices comprising microprocessors and/or microcontrollers for automatically controlling devices and apparatus of all types have become extremely widespread in all areas of technology. These microprocessors perform their functions by sending control signals to actuator devices, for example, power semiconductors or relays.

It is clear that, for many applications, it is useful to be able to control the state and functionality of these actuator devices. In fact, in various fields, such as, for example, the motor-vehicle field, there are apparatus the functioning of which is important or even essential, for example, antilock braking systems for which the possibility of being able to diagnose possible breakdowns is extremely useful.

Normally, the interfaces used for connections between the microprocessors and the actuator devices have no diagnostic functions or are provided therewith by additional communication lines (I/O), that is, dedicated particularly to the diagnostic functions. This manner of performing the diagnosis is evidently expensive and, furthermore, increases complexity of the electronic system. EP-A-0 418 665 exemplifies that prior art.

The object of the present invention is to provide an interface which enables all of the above problems to be overcome satisfactorily.

According to the present invention, this object is achieved by virtue of an interface having the characteristics given in the claims following the present description.

Further advantages and characteristics of the present invention will become clear from the following detailed description given with reference to the appended drawings, provided by way of non-limiting example, in which:
- Figure 1 is a schematic circuit diagram of an embodiment of an interface according to the present invention; and
- Figures 2, 3 and 4 are schematic circuit diagrams of alternative embodiments of the interface according to the present invention.

The specific embodiments described here refer to semiconductor actuator devices since they constitute the great majority of the actuator devices connected to microcontrollers and microprocessors and are generally used for controlling other electrical devices such as motors, relays, etc.

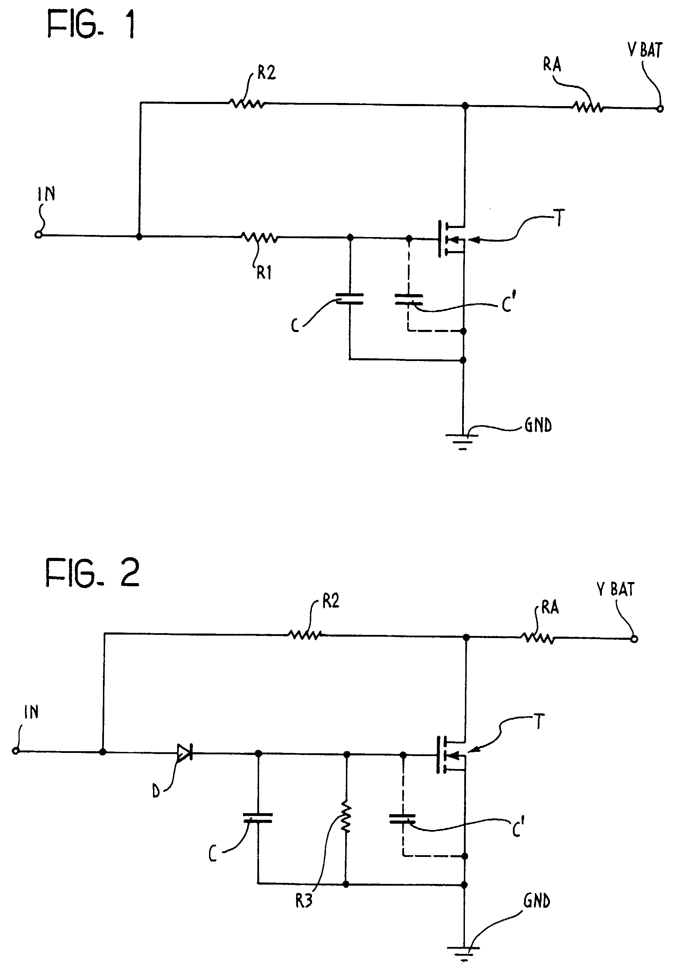

The interface according to the present invention has three operating states which are known in the following as ON, OFF and TEST MODE. As already stated, the circuit of the interface, shown in Figure 1, comprises a semiconductor device T, for example, a FET or MOSFET-type transistor or a CMOS or HCMOS logic gate. This can be simple, for example, a transistor or complex, for example, a logic gate (inverting or not) which controls a transistor. This semiconductor device T naturally has a control terminal which is normally connected by a resistor R1 to a communication terminal, or line, IN connected to a microprocessor. The semiconductor device T controls a device or charge RA (represented by a resistor) which is connected to a voltage source VBAT.

The circuit further comprises a feedback resistor R2 connected between the communication line IN and the terminal of the transistor T connected to the charge resistor RA, and a capacitor C which connects the control terminal of the transistor T to earth GND.

In the operating state ON, a high voltage level (ON) which is subsequently maintained as such by the capacity of the capacitor C for a period of time determined by the time constant of the discharge of the capacitor C, is forced to the control terminal of the transistor T by the line IN.

In the operating state OFF, a low voltage level (OFF) which is subsequently maintained as such by the capacity of the capacitor C for a period of time determined by the time constant of the charge of the capacitor C, is forced to the control terminal of the transistor T by the line IN.

The time constant, for charging and/or discharging, of the capacitor C can possibly be determined by a resistor R3, connected in parallel with the capacitor C and having corresponding size. This alternative embodiment is shown in Figure 2 in which an uncoupling diode D disposed between the line IN and the control terminal of the transistor T is also provided instead of the resistor R1.

In the operating state TEST MODE, the capacitor C maintains the command previously imposed on the line IN connected to the microprocessor for these predetermined periods of time. The capacitor C thus "memorises" the command emitted by the microprocessor and maintains it at the control terminal of the transistor T so as to "free" the line IN.

This line IN, previously used as an output of the microprocessor for transmitting the command, is then used subsequently as an input, thus enabling the microprocessor to detect the voltage level present at the terminal of the transistor T connected to the charge RA. The microprocessor can thus check that the voltage level detected at this point is appropriate for the correct voltage level in this situation.

It will be appreciated that the microprocessor must be arranged and/or programmed such that it can perform these detecting operations. Since the programming and/or arranging of microprocessors and microprocessor systems are within the ability of a person skilled in the art, these operations will not be explained in detail in the present document.

If it is wished to extend the operating state TEST MODE using the permanent short-circuit protection function, it is necessary to provide a resistor (not shown) disposed in series with the transistor T, that is, connected between the transistor T and earth GND, in order to restrict the maximum destructive peak current.

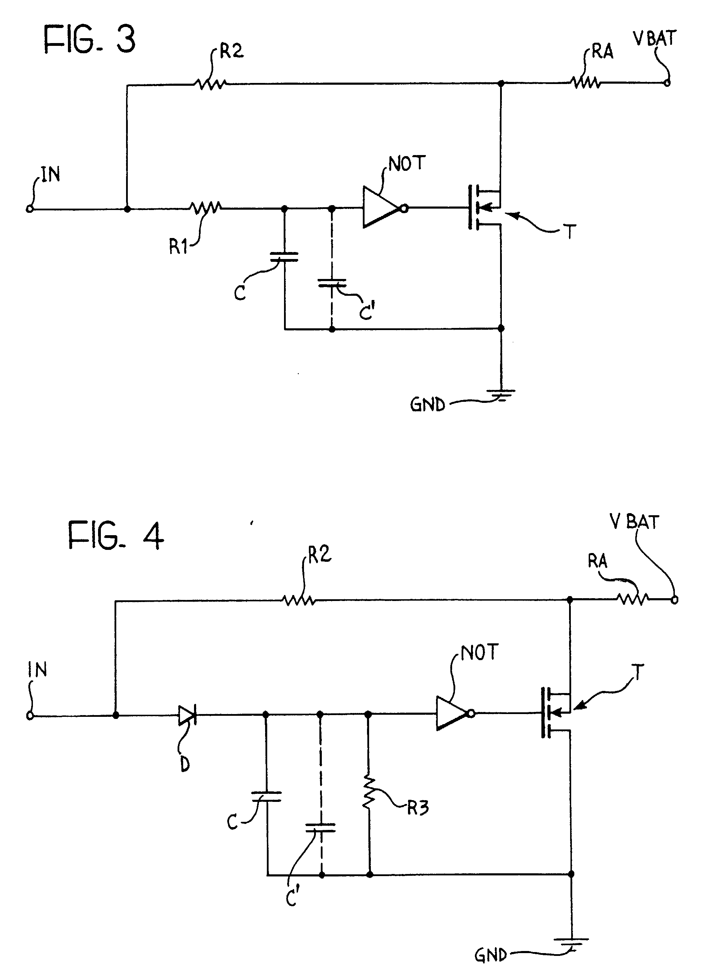

The interface according to the present invention can advantageously function both with inverting devices and with non-inverting devices, which may be simple, such as, for example, a transistor or more complex, for example, composed of an active component such as a logic gate plus a transistor. Figures 3 and 4 show, for example, two alternative circuits, corresponding to the circuits of Figures 1 and 2 respectively, in which the transistor T is not controlled directly by the communication line IN but by means of an inverting gate of the NOT type.

Using devices of the non-inverting type, the circuit is more efficient owing to the intrinsic protection in the event of short-circuits by virtue of the circuit feedback which always restricts the current to a predetermined limit and by virtue of the ability to maintain the operating state (ON or OFF) initially imposed. This state can be memorised for a longer amount of time for example by a bistable circuit, during which the line IN connected to the microprocessor, used as the input, can control the output of the semiconductor device T, for example, according to the process known as polling.

In an advantageous alternative embodiment, the interface according to the invention can also be used to perform a closed-loop control of the current flowing through the pulse width modulating (PWM) charge RA without requiring a communication line dedicated to detecting the current itself.

In an alternative embodiment, the interface according to the invention does not require a capacitor C for memorising the control signals, since this function is performed by the stray capacitance at the input of the transistor T. This capacity, indicated C' in Figures 1 and 2 (connected by dotted lines), can thus replace the capacitor C where possible. As regards the embodiment shown in Figures 3 and 4, in which an inverting gate NOT is interposed between the transistor T and the line IN, it is possible to use the stray capacitance C' only in the case in which the transistor T and the inverting gate NOT are together in a single integrated semiconductor device comprising the transistor T and the gate NOT. In this case, in fact, the integrated semiconductor device comprises the transistor T and the gate NOT also has a stray capacitance C' at the input which can be used in the manner described above. For this reason, a stray capacitance C' is also shown at the input of the inverting gate NOT in Figures 3 and 4.

## Claims

1. An interface device which can allow processing means to control actuator means (RA), by means of a communication line (IN); and comprising semiconductor means (T) driven by these processing means and which can control the passage of electric current through the actuator means (RA), characterized in that it further comprises:
- means for storing electric charge (C, C'), operationally connected to the communication line (IN) and to the semiconductor means (T), which can memorise and maintain a control signal sent by the processing means to the semiconductor means (T);
- detector means (R2), operationally connected to the communication line (IN) and to the actuator means (RA), which can allow these processing means to detect a signal indicating the passage of electric current through the actuator means (RA).

2. A device according to Claim 1, in which the voltage of the semiconductor means (T) is controlled and the control signal is a voltage signal, characterized in that the charge storage means (C, C') are brought to the voltage of the control signal and maintain it for a time interval of predetermined duration in order to control the semiconductor means (T).

3. A device according to Claim 2, characterized in that the charge storage means comprise a capacitance (C, C').

4. A device according to Claim 3, characterized in that the capacitance consists of a capacitance (C') input to the semiconductor means (T).

5. A device according to Claim 4, characterized in that the capacitance (C') input to the semiconductor means (T) is a stray capacitance.

6. A device according to Claim 3, characterized in that the charge storage means (C, C') comprise a capacitor (C).

7. Device according to any one of Claims 4 to 6, characterized in that the detector means comprise resistor means (R2) connecting the actuator means (RA) to the communication line (IN), such that the processing means detect a voltage at the actuator means (RA) by the resistor means (R2) and the communication line (IN) in the time intervals in which the semiconductor means (T) are controlled by the charge storage means (C, C').

8. A device according to Claim 7, characterized in that the resistor means comprise a resistor (R2).

9. A device according to Claim 8, characterized in that a resistor (R1) is interposed between the communication line (IN) and the semiconductor means (T).

10. A device according to Claim 8, characterized in that an uncoupling diode (D) is interposed between the communication line (IN) and the semiconductor means (T).

11. A device according to any one of Claims 8 to 10, characterized in that it comprises a resistor (R3) connected in parallel with the capacitor (C) in order to determine the duration of the time intervals.

12. A device according to any one of the preceding claims, in which the semiconductor means comprise a transistor (T), characterized in that it further comprises a restrictor resistor connected in series with the transistor (T).

13. A device according to any one of the preceding claims, characterized in that it comprises logic means (NOT) interposed between the communication line (IN) and the transistor (T).

14. A device according to Claim 13, characterized in that the logic means comprise a logic gate (NOT).

15. A device according to Claim 14, characterized in that the logic gate is an inverting logic gate (NOT).

16. A process for controlling actuator means (RA) in a system comprising processing means and an interface device according to any one of Claims 1 to 15, interposed between the processing means and the actuator means (RA), characterized in that the processing means are configured to perform the following stages:
- sending a control signal to the interface device by means of the communication line (IN) in a first predetermined time period; and
- detecting the functioning of the actuator means (RA) by means of the communication line (IN) and the interface device in a second predetermined period of time.

17. A process according to Claim 16, characterized in that the stage for detecting the functioning of the actuator means (RA) comprises the stage of detecting a voltage at the actuator means (RA) by the communication line (IN) and the interface device.

18. A process according to Claim 17, characterized in that it further comprises the stage of controlling a passage of current through the actuator means (RA) according to a predetermined development.

19. A process according to Claim 18, characterized in that the stage for controlling the passage of current through the actuator means (RA) comprises the stage of periodically detecting the voltage at the actuator means (RA), this voltage being indicative of the passage of current.

20. A process according to Claim 19, characterized in that the passage of current through the actuator means (RA) is controlled by pulse width modulation.

## Patentansprüche

1. Schnittstelle, die es einer Prozessorstufe ermöglicht, eine Stelleinrichtung (RA) über eine Übertragungsleitung (IN) zu steuern; wobei die Schnittstelle ein Halbleiterbauelement (T) enthält, das von dieser Prozessorstufe angesteuert wird und den Stromfluß durch die Stelleinrichtung (RA) steuern kann, dadurch gekennzeichnet, daß die Schnittstelle weiters enthält:
- eine Einrichtung, um eine elektrische Ladung zu speichern (C, C'), wobei die Einrichtung betriebsmäßig mit der Übertragungsleitung (IN) sowie dem Halbleiterbauelement (T) verbunden ist, wobei die Einrichtung ein Steuersignal speichern und halten kann, das von der Prozessorstufe zum Halbleiterbauelement (T) ausgesandt wird;
- eine Abtasteinrichtung (R2), die betriebsmäßig mit der Übertragungsleitung (IN) sowie mit der Stelleinrichtung (RA) verbunden ist, wodurch diese Prozessorstufe ein Signal abtasten kann, das den Stromfluß durch die Stelleinrichtung (RA) anzeigt.

2. Schnittstelle gemäß Anspruch 1, wobei die Spannung des Halbleiterbauelements (T) gesteuert wird, wobei das Steuersignal ein Spannungssignal ist, dadurch gekennzeichnet, daß die Ladungsspeichereinrichtung (C, C') auf die Spannung des Steuersignals gebracht und für ein Zeitintervall von vorgegebener Dauer gehalten wird, um das Halbleiterbauelement (T) zu steuern.

3. Schnittstelle gemäß Anspruch 2, dadurch gekennzeichnet, daß die Ladungsspeichereinrichtung eine Kapazität (C, C') enthält.

4. Schnittstelle gemäß Anspruch 3, dadurch gekennzeichnet, daß die Kapazität aus einem kapazitiven Eingang (C') zum Halbleiterbauelement (T) besteht.

5. Schnittstelle gemäß Anspruch 4, dadurch gekennzeichnet, daß der kapazitive Eingang (C') zum Halbleiterbauelement (T) eine Streukapazität ist.

6. Schnittstelle gemäß Anspruch 3, dadurch gekennzeichnet, daß die Ladungsspeichereinrichtung (C, C') einen Kondensator (C) enthält.

7. Schnittstelle gemäß irgendeinem der Ansprüche 4 bis 6, dadurch gekennzeichnet, daß die Abtasteinrichtung ein Widerstandselement (R2) enthält, das die Stelleinrichtung (RA) mit der Übertragungsleitung (IN) verbindet, so daß die Prozessorstufe über das Widerstandselement (R2) und die Übertragungsleitung (IN) eine Spannung an der Stelleinrichtung (RA) in jenen Zeitintervallen abtastet, in denen das Halbleiterbauelement (T) von der Ladungsspeichereinrichtung (C, C') gesteuert wird.

8. Schnittstelle gemäß Anspruch 7, dadurch gekennzeichnet, daß das Widerstandselement einen Widerstand (R2) enthält.

9. Schnittstelle gemäß Anspruch 8, dadurch gekennzeichnet, daß ein Widerstand (R1) zwischen der Übertragungsleitung (IN) und dem Halbleiterbauelement (T) liegt.

10. Schnittstelle gemäß Anspruch 8, dadurch gekennzeichnet, daß eine Entkopplungsdiode (D) zwischen der Übertragungsleitung (IN) und dem Halbleiterbauelement (T) liegt.

11. Schnittstelle gemäß irgendeinem der Ansprüche 8 bis 10, dadurch gekennzeichnet, daß die Schnittstelle einen Widerstand (R3) enthält, der parallel zum Kondensator (C) liegt, um die Länge der Zeitintervalle festzulegen.

12. Schnittstelle gemäß irgendeinem der bisherigen Ansprüche, wobei das Halbleiterbauelement einen Transistor (T) enthält, dadurch gekennzeichnet, daß die Schnittstelle weiters einen Begrenzerwiderstand enthält, der mit dem Transistor (T) in Serie liegt.

13. Schnittstelle gemäß irgendeinem der bisherigen Ansprüche, dadurch gekennzeichnet, daß die Schnittstelle eine Logikstufe (NOT) enthält, die zwischen der Übertragungsleitung (IN) und dem Transistor (T) liegt.

14. Schnittstelle gemäß Anspruch 13, dadurch gekennzeichnet, daß die Logikstufe ein Logikgatter (NOT) enthält.

15. Schnittstelle gemäß Anspruch 14, dadurch gekennzeichnet, daß das Logikgatter ein invertierendes Logikgatter (NOT) ist.

16. Verfahren, um eine Stelleinrichtung (RA) in einem System zu steuern, das eine Prozessorstufe und eine Schnittstelle gemäß irgendeinem der Ansprüche 1 bis 15 enthält, wobei die Schnittstelle zwischen der Prozessorstufe und der Stelleinrichtung (RA) liegt, dadurch gekennzeichnet, daß die Prozessorstufe so aufgebaut ist, um folgende Schritte auszuführen:
- Aussenden eines Steuersignals zur Schnittstelle mit Hilfe der Übertragungsleitung (IN) in einem ersten vorgegebenen Zeitintervall; und
- Abtasten der Arbeitsweise der Stelleinrichtung (RA) mit Hilfe der Übertragungsleitung (IN) und der Schnittstelle in einem zweiten vorgegebenen Zeitintervall.

17. Verfahren gemäß Anspruch 16, dadurch gekennzeichnet, daß der Schritt zum Abtasten der Arbeitsweise der Stelleinrichtung (RA) einen Schritt enthält, um eine Spannung an der Stelleinrichtung (RA) über die Übertragungsleitung (IN) und die Schnittstelle abzutasten.

18. Verfahren gemäß Anspruch 17, dadurch gekennzeichnet, daß das Verfahren weiters einen Schritt enthält, um den Stromfluß durch die Stelleinrichtung (RA) in Übereinstimmung mit einer vorgegebenen Entwicklung zu steuern.

19. Verfahren gemäß Anspruch 18, dadurch gekennzeichnet, daß der Schritt zum Steuern des Stromflußes durch die Stelleinrichtung (RA) einen Schritt enthält, um die Spannung an der Stelleinrichtung (RA) periodisch abzutasten, wobei diese Spannung den Stromfluß anzeigt.

20. Verfahren gemäß Anspruch 19, dadurch gekennzeichnet, daß der Stromfluß durch die Stelleinrichtung (RA) mit einer Impulsbreitenmodulation gesteuert wird.

## Revendications

1. Dispositif d'interface, permettant à des moyens de traitement de commander des moyens actionneurs (RA) par l'intermédiaire d'une ligne de communication (IN) ; et comprenant des moyens à semi-conducteur (T) pilotés par ces moyens de traitement et qui peuvent commander le passage de courant électrique à travers les moyens actionneurs (RA), caractérisé en ce qu'il comprend, en outre :
- des moyens pour emmagasiner une charge électrique (C, C'), connectés, en fonctionnement, à la ligne de communication (IN) et aux moyens à semi-conducteur (T), qui peuvent mémoriser et maintenir un signal de commande adressé par les moyens de traitement aux moyens à semi-conducteur (T) ;
- des moyens détecteurs (R2), connectés, en fonctionnement, à la ligne de communication (IN) et aux moyens actionneurs (RA), qui peuvent autoriser ces moyens de traitement à détecter un signal indiquant le passage de courant électrique à travers les moyens actionneurs (RA).

2. Dispositif selon la revendication 1, dans lequel la tension des moyens à semi-conducteur (T) est commandée et le signal de commande est un signal de tension, caractérisé en ce que les moyens d'emmagasinement de charge (C, C') sont amenés à la tension du signal de commande et le maintiennent pendant un intervalle de temps d'une durée prédéterminée de manière à commander les moyens à semi-conducteur (T).

3. Dispositif selon la revendication 2, caractérisé en ce que les moyens d'emmagasinement de charge comprennent une capacité (C, C').

4. Dispositif selon la revendication 3, caractérisé en ce que la capacité consiste en une capacité (C') d'entrée dans les moyens à semi-conducteur (T).

5. Dispositif selon la revendication 4, caractérisé en ce que la capacité (C') d'entrée dans les moyens à semi-conducteur (T) est une capacité parasite.

6. Dispositif selon la revendication 3, caractérisé en ce que les moyens d'emmagasinement de charge (C, C') comprennent un condensateur (C).

7. Dispositif selon l'une quelconque des revendications 4 à 6, caractérisé en ce que les moyens détecteurs comprennent des moyens formant résistance (R2) connectant les moyens actionneurs (RA) à la ligne de communication (IN), de sorte que les moyens de traitement détectent une tension aux moyens actionneurs (RA) grâce aux moyens formant résistance (R2) et à la ligne de communication (IN) au cours des intervalles de temps pendant lesquels les moyens à semi-conducteur (T) sont commandés par les moyens d'emmagasinement de charge (C, C').

8. Dispositif selon la revendication 7, caractérisé en ce que les moyens formant résistance (R2) comprennent une résistance.

9. Dispositif selon la revendication 8, caractérisé en ce que la résistance (R1) est interposée entre la ligne de communication (IN) et les moyens à semi-conducteur (T).

10. Dispositif selon la revendication 8, caractérisé en ce qu'une diode de découplage (D) est interposée entre la ligne de communication (IN) et les moyens à semi-conducteur (T).

11. Dispositif selon l'une quelconque des revendications 8 à 10, caractérisé en ce qu'il comprend une résistance (R3) connectée en parallèle au condensateur (C) de manière à déterminer la durée des intervalles de temps.

12. Dispositif selon l'une quelconque des revendications précédentes, dans lequel les moyens à semi-conducteur comprennent un transistor (T), caractérisé en ce qu'il comprend, en outre, une résistance limitatrice de courant connectée en série avec le transistor (T).

13. Dispositif selon l'une quelconque des revendications précédentes, caractérisé en ce qu'il comprend des moyens logiques (NOT) interposés entre la ligne de communication (IN) et le transistor (T).

14. Dispositif selon la revendication 13, caractérisé en ce les moyens logiques comprennent une porte logique (NOT).

15. Dispositif selon la revendication 14, caractérisé en ce la porte logique (NOT) est une porte logique d'inversion (NOT).

16. Procédé pour commander des moyens actionneurs (RA) dans un système comprenant des moyens de traitement et un dispositif d'interface selon l'une quleconque des revendications 1 à 15, interposé entre les moyens de traitement et les moyens actionneurs (RA), caractérisé en ce que les moyens de traitement sont configurés pour réaliser les étapes suivantes, qui consistent :
- à adresser un signal de commande au dispositif d'interface par l'intermédiaire de la ligne de communication (IN) au cours d'une première période de temps prédéterminée ; et
- à détecter l'état de fonctionnement des moyens actionneurs (RA) par l'intermédiaire de la ligne de communication (IN) et du dispositif d'interface au cours d'une seconde période de temps prédéterminée.

17. Procédé selon la revendication 16, caractérisé en ce que l'étape consistant à détecter l'état de fonctionnement des moyens actionneurs (RA) comprend l'étape consistant à détecter une tension aux moyens actionneurs (RA) grâce à la ligne de communication (IN) et au dispositif d'interface.

18. Procédé selon la revendication 17, caractérisé en ce qu'il comprend, en outre, l'étape consistant à commander un passage de courant à travers les moyens actionneurs (RA) en fonction d'un développement prédéterminé.

19. Procédé selon la revendication 18, caractérisé en ce que l'étape consistant à commander le passage de courant à travers les moyens actionneurs (RA) comprend l'étape consistant à détecter périodiquement la tension aux moyens actionneurs (RA), cette tension étant indicative du passage de courant.

20. Procédé selon la revendication 19, caractérisé en ce que le passage de courant à travers les moyens actionneurs (RA) est commandé par modulation de largeur d'impulsion.
